Europäisches Patentamt

European Patent Office

Office européen des brevets

(19)

(11) Veröffentlichungsnummer: **0 432 788 A1**

## (12) EUROPÄISCHE PATENTANMELDUNG

(21) Anmeldenummer: 90124184.4

(22) Anmeldetag: 14.12.90

(51) Int. Cl.5: **B60K 41/16**, F16H 61/42

(30) Priorität: 14.12.89 PL 282796

(43) Veröffentlichungstag der Anmeldung:
**19.06.91 Patentblatt 91/25**

(84) Benannte Vertragsstaaten:
**DE ES FR GB IT**

(71) Anmelder: **KORSMEYER TRADING INTERN.LTD.**
**3 Library Ramp**

(GI)

(72) Erfinder: **Korsmeyer, Julius**
**Galileistrasse 69**
**W-4790 Bad Oeynhausen(DE)**

(74) Vertreter: **Hoefer, Theodor, Dipl.-Ing.**
**Kreuzstrasse 32**
**W-4800 Bielefeld 1(DE)**

(54) **Steuerungsvorrichtung eines Verbrennungsmotors mit einem hydrostatischen Übersetzungsgetriebe.**

(57) Bei einer Steuerungsvorrichtung für einen Verbrennungsmotor und einem mit ihm gekoppelten hydrostatischen Übersetzungsgetriebe, die mit verbundenen und zusammenwirkenden zweiarmigen Hebeln (15), Zugstange (14), Rollenhebeln (27), einarmigen Nockenhebeln (22) und Bowdenzügen (16, 17, 28) ausgestattet ist, ist zwischen einem Gaspedal (13) und einem Steuerhebel (29) eine auf das hydrostatische Übersetzungsgetriebe (3) einwirkende Steuereinrichtung eingeschaltet, die mit einer zwischen den Enden der von dem Gaspedal (13) einerseits und des Steuerhebels andererseits kommende Bowdenzüge umgeschalteten Hebeleinrichtung (31, 26, 22) ausgestattet ist und die dabei mit einem den Steuerungsbolzen (21) des Übersetzungsgetriebes (3) bewegenden einarmigen Hebel (22) versehen ist, dessen kurvenförmige Führungsflächen (35, 36) einen abgefederten Führungsbolzen (26 a) führt, der an einem Rollenhebel (31) beweglich gelagert ist.

Fig. 4

## STEUERUNGSVORRICHTUNG EINES VERBRENNUNGSMOTORS MIT EINEM HYDROSTATISCHEN ÜBERSETZUNGSGETRIEBE

Die Erfindung bezieht sich auf eine Steuerungsvorrichtung eines Verbrennungsmotors mit damit gekoppeltem hydrostatischen Übersetzungsgetriebe, insbesondere geeignet für Spezialfahrzeuge wie für den Transport von Golfgeschirr und deren Spieler (Golfkarren genannt), Bodenkehrmaschinen und andere Fahrzeuge von geringerer Fahrgeschwindigkeit. Diese Steuerungsvorrichtung ist in ansich bekannter Weise mit zusammenwirkenden Hebeln, Zugstangen, Rollenhebeln und Bowdenzügen ausgest attet.

In den allgemein bekannten Spezialfahrzeugen wie Golfkarren besitzt der Antriebskasten einen begrenzten Rauminhalt, der durch den Fahrzeugumriss gegeben ist.

Je nach Antriebsquelle sind im Antriebskasten Akku-Sätze mit Elektromotor gelagert, die mit dem Schaltgetriebe in der Fahrzeugantriebsachse gekoppelt sind.

In den neueren Lösungen von Golfkarren ist der Verbrennungsmotor unmittelbar mit dem hydrostatischen Getriebe mit einem direkten, individuellen Antrieb gekoppelt, dessen Drehmoment dann auf die starren Halbwellen der Antriebsräder übertragen wird.

Die aus den US-Patenten 4 321 980 und 4 512 451 bekannten Steuerungssysteme für Antriebseinheiten und Antriebsübertragungen arbeiten mit dem Prinzip verbundener und zusammenwirkender Verschiebestößel. Dazu gehören Einarm- und Zweiarmhebel, Zugstangen, Nocken-Drehelemente und Bowdenzüge.

Die Steuerungssysteme wirken gleichzeitig auf den Verbrennungsmotor - in Drehfunktion und auf das hydrostatische Übersetzungsgetriebe - in der Funktion einer Durchflußgröße des Mediums in die Flüssigkeitsmotore, mit der Steuerungsmöglichkeit für "Vorwärts- und Rückwärtsfahrt". Die bekannten Steuerungssysteme erfordern eine sorgfältige Wartung und sind anfällig für Verklemmungen - vor allem der Zugstangen unter erschwerten Einsatzbedingungen wie Staub, Sand.

Aufgabe der Erfindung ist es, eine zusammenwirkende Vorrichtung einer Motorsteuerung und einem mit dem Motor gekoppelten hydrostatischen Übersetzungsgetriebe zu schaffen, das einsatzbeständig auch bei schweren Einsatzbedingungen sein soll, wobei die gleichen Bedienungsbewegungen wie beim elektrisch angetriebenen Golfkarren eingehalten werden können.

Diese Aufgabe wird bei einer Steuerungsvorrichtung der vorgenannten Gattung dadurch gelöst, daß zwischen einem Gaspedal und einem Steuerhebel eine auf das hydrostatische Übersetzungsgetriebe einwirkende Steuereinrichtung eingeschaltet ist, die mit einer zwischen den Enden der von dem Gaspedal einerseits und des Steuerhebels andererseits kommende Bowdenzüge umgeschalteten Hebeleinrichtung ausgestattet ist und die dabei mit einem den Steuerungsbolzen des Übersetzungsgetriebes bewegenden einarmigen Hebel versehen ist, dessen kurvenförmige Führungsflächen einen abgefederten Führungsbolzen führt, der an einem Rollenhebel beweglich gelagert ist.

Bei einer bevorzugten Ausführung ist das Endstück des Bowdenzuges zusammen mit einem Mitnehmer in einer am Rollenhebel befestigten Führung gleitend eingesetzt und führt eine radiale und längs des Radius verlaufende Bewegung gegenüber dem Drehpunkt des Rollenhebels aus, der mit der Steuerungsrolle mit Hilfe von Bowdenzügen verbunden ist. Die Rolle des Mitnehmers ist mit einem einarmigen Hebel (Schwinge) durch eine in ihm symmetrisch ausgeführte Nockenbohrung, bestehend aus einer Gleitkrümmung und einer Hilfskrümmung, durch einen Bogen mit einem Radius von dem des Arbeitssitzes gebildeten, verbunden, wobei der einarmige Hebel am Steuerungsbolzen des hydrostatischen Übersetzungsgetriebes befestigt ist.

Der in der Führung eingesetzte Mitnehmer bildet zusammen mit dem einarmigen Hebel ein kinematisches Paar. Das zweite Seilende des Bowdenzuges, welcher mit der Führung verbunden ist, ist mit dem Arm des zweiarmigen Hebels verbunden, der wiederum mit einem Bowdenzug verbunden ist. Dieser Bowdenzug steuert den Vergaser des Verbrennungsmotors, der das hydrostatische Übersetzungsgetriebe antreibt.

Bei einer weiteren bevorzugten Ausführungsform der Erfindung ist der Führungsbolzen an einem Hebel einer damit fest verbundenen Rolle gelagert und steht unter der Einwirkung einer Zugfeder, die mit dem Ende des zur Gaspedale gehenden Bowdenzuges verbunden ist.

Weitere Merkmale ergeben sich aus den Unteransprüchen.

Der Schutz erstreckt sich nicht nur auf die Einzelmerkmale, sondern auch auf deren Kombination.

Ein Ausführungsbeispiel der Erfindung ist in der Zeichnung dargestellt und wird im folgenden näher beschrieben. Es zeigen:

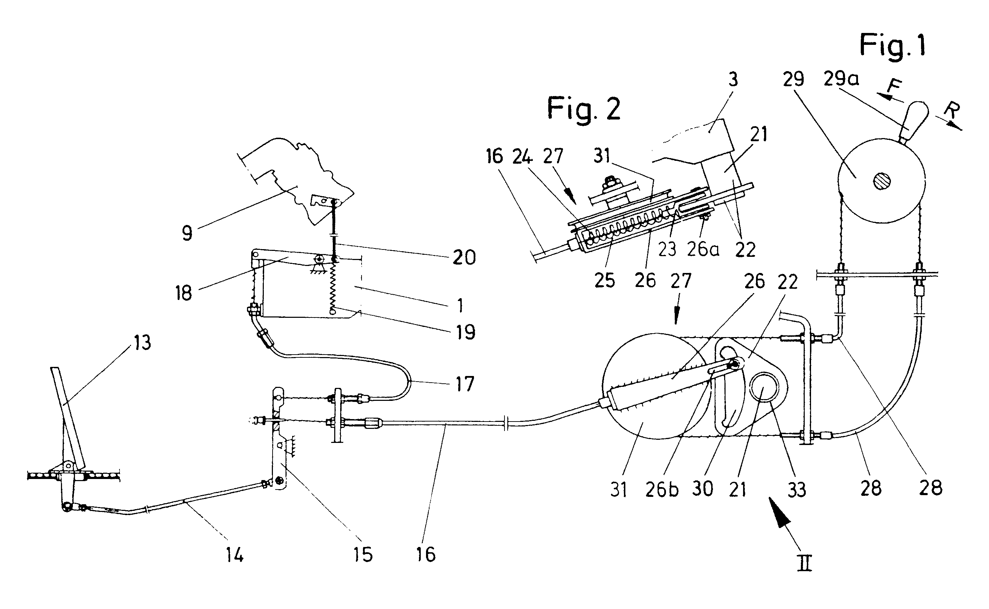

Fig. 1    eine schematische Übersichtszeichnung einer Steuerungsvorrichtung;

Fig. 2    eine Teilansicht derselben Steuerungsvorrichtung entsprechend Pfeilrichtung II in Fig. 1;

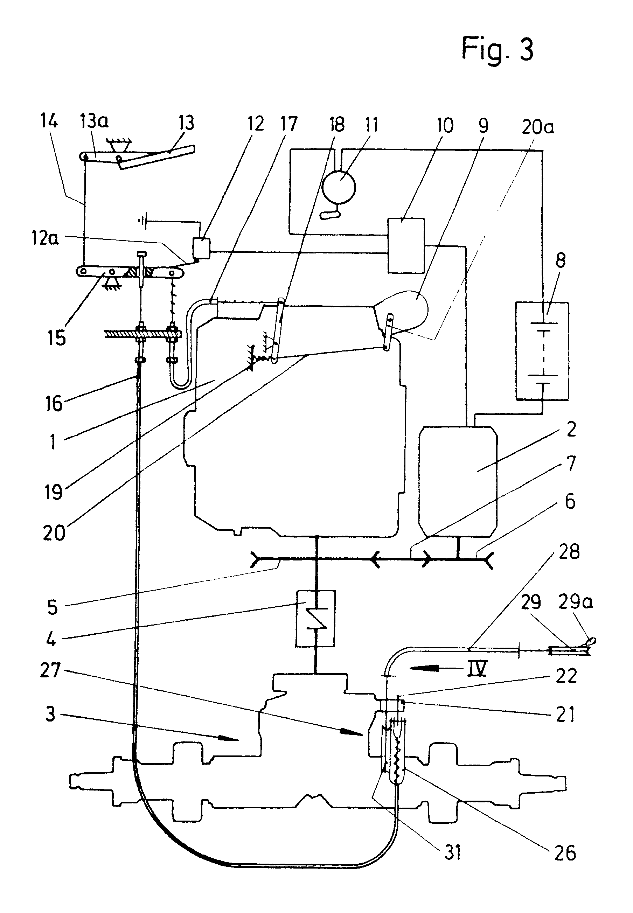

Fig. 3 eine Schemazeichnung der Steuerungsvorrichtung für den Verbrennungsmotor und das hydrostatische Übersetzungsgetriebe;

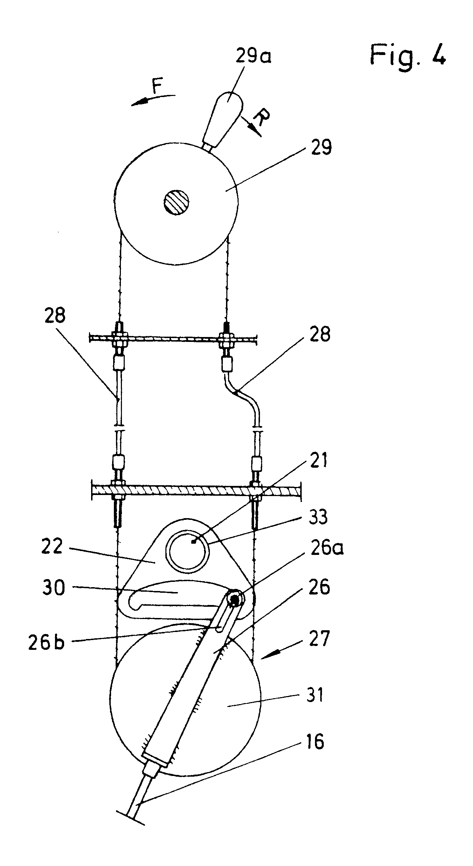

Fig. 4 eine Teilansicht des Steuerungsschemas entsprechend Pfeilrichtung IV in Fig. 3;

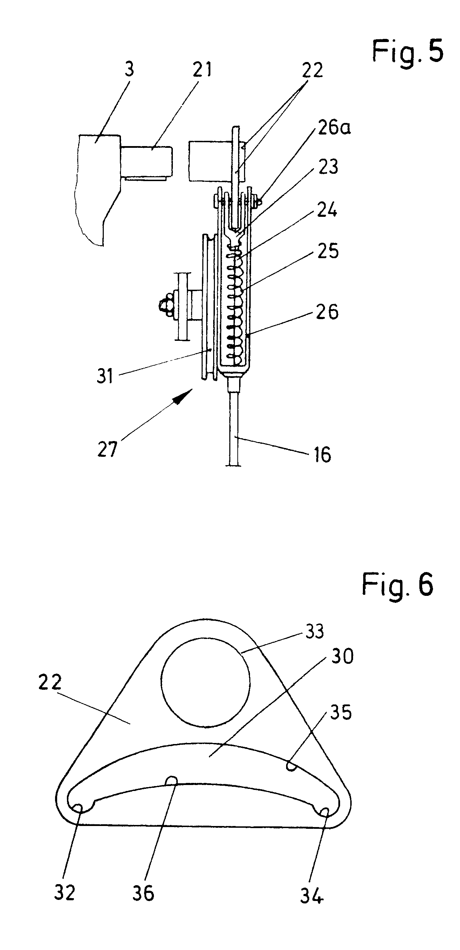

Fig. 5 eine gegenüber der Fig. 2 vergrößerte Darstellung der Verbindung eines Mitnehmers mit einem einarmigen Hebel, jedoch in getrennter Darstellung vom hydrostatischen Übersetzungsgetriebe:

Fig. 6 den auf einen Steuerungsbolzen des hydrostatischen Übersetzungsgetriebes auf zusteckenden einarmigen Hebel in gegenüber den Fig. 1 und 4 vergrößerter Darstellung.

Ein Verbrennungsmotor (1) ist über eine elastische Kupplung (4) mit einem hydrostatischen Übersetzungsgetriebe (3) verbunden, wobei auf einer Welle des Verbrennungsmotors (1) ein Keilrad (5) aufgesetzt und über einen Keilriemen (7) mit dem Keilrad (6) - auf der Welle des Lichtanlassers (2) - verbunden ist.

Die Arbeit des Lichtanlassers (2) regelt eine Steuerungseinrichtung (10), welche die Spannung von einem Akkumulator (8) über einen Stromschalter (11) und Mikroschalter (12), der durch einen zweiarmigen Hebel (15) mit festem Schwenkpunkt (15 a) gesteuert ist, dem Lichtanlasser (2) zuführt.

Der zweiarmige Hebel (15) ist durch ein Gaspedal (13) über eine Zugstange (14) beaufschlagbar (bewegbar). An dem längeren Arm dieses zweiarmigen Hebels (15) sind:

1. an dessen Ende das Seil eines Bowdenzuges (17) angeschlossen, dessen Ende an einem Hebel (18) angeschlagen ist, der unter der Wirkung einer Feder (19) steht und mit einer Zugstange (20) gekuppelt ist, die den Hebel des Vergasers (9) des Verbrennungsmotors (1) steuert;

2. in dessen Mitte das Seil eines Bowdenzuges (16) angeschlagen, der das hydrostatische Übersetzungsgetriebe (3) steuert.

Der Panzer des Bowdenzuges (16) stützt sich von außen her an einem Führungshalter (26) ab, wobei das Ende des Seiles (24) des Bowdenzuges (16) von einer Zugfeder (25) umgeben ist, die sich im Sitz des Führungshalters (26) und auf dem zylindrischen Teil eines Mitnehmers (23) abstützt, an dem das Ende des Seiles (24) befestigt ist.

Auf einem um eine unveränderliche Achse sich drehenden Steuerungsbolzen (21) des hydrostatischen Übersetzungsgetriebes (3) ist ein einarmiger Hebel (22) in Form einer dreieckförmigen Schwinge aufgesetzt. Dieser Hebel (22) ist verschiebbar über eine in etwa kreisbogenförmig ausgebildete Ausnehmung (30) und dem Mitnehmer (23) mit einem Rollenhebel (27) verbunden. Der Führungshalter (26) ist fest mit dem Rollenhebel (27) verbunden, der eine

Drehbewegung ausführen kann und mit einer Steuerungsrolle (29) mit Handgriff (29 a) mit Hilfe von Bowdenzügen (28) verbunden ist, wobei der Achsabstand der Steuerungsrolle (29) von einer Drehrolle (31) unveränderlich ist. Durch die beiden freien Schenkelenden des in etwa U-förmig ausgebildeten Führungshalters (26) ist ein Bolzen (26 a), eine Schraube o. dgl. gesteckt. Dieser Bolzen (26 a) durchdringt einerseits die beiden freien Enden des in etwa U-förmigen ausgebildeten Mitnehmers (23), der zwischen den in einem Abstand sich gegenüberliegenden Schenkeln des schwenkbaren Führungshalters (26) angeordnet ist. und andererseits den einarmigen dreieckförmigen Hebel (22), der zwischen den beiden sich in einem Abstand gegenüberliegenden Schenkeln des Mitnehmers (23) angeordnet ist. Die von dem Bolzen (26 a) durchdrungenen Ausnehmungen im Führungshalter (26) sind als in dessen Längsrichtung verlaufende Langlöcher (26 b) ausgebildet.

Die Längsachse des Bolzens (26 a) läuft mit der gedachten Längsachse der Nockenbohrung (33) parallel.

Das Steuern der Vorrichtung beschränkt sich auf das Einschalten des Stromschalters (11) - der Verbrennungsmotor (1) verbleibt noch im Ruhestand - und auf die Ausführung folgender Tätigkeiten bei Vorwärtsfahrt:

a) den Handgriff der Steuerungsrolle (29) bis zum Widerstand (Anschlag) in Richtung F - Vorwärtsfahrt - bringen; bei dieser Tätigkeit dreht sich die Drehrolle (31) des Rollenhebels (27). Nach Beendigung dieser Drehbewegung liegt der den Mitnehmer (23) durchdringende Bolzen (26 a) im Arbeitssitz (32) der Ausnehmung (30) als Steuerkurve des einarmigen Hebels (22). Damit ist auch der Mitnehmer (23) im Bereich des Arbeitssitzes (32) festgelegt und hat den einarmigen Hebel (22) und damit auch den Steuerungsbolzen (21) etwas gedreht;

b) fließend auf das Gaspedal (13) drücken: in der ersten Druckphase schaltet der Mikroschalter (12), der die Steuerungseinrichtung (10) betätigt; zugleich setzt der Lichtanlasser (2) den Verbrennungsmotor (1) in Gang, der dann im Leerlauf arbeitet, wobei der Lichtanlasser (2) über die Steuerungseinrichtung (10) den Akkumulator (8) auflädt;

c) in der zweiten Druckphase auf das Gaspedal (13) erhöht der den Vergaser (9) steuernde Bowdenzug (17) die Drehzahl des Verbrennungsmotors (1) bis zum Erreichen der maximalen Drehzahl. Gleichzeitig bewirkt der Bowdenzug (16) eine Drehbewegung des Mitnehmers (23) und desgleichen eine Schwenkbewegung des einarmigen dreieckförmigen Hebels (22) zusammen mit dem Steuerungsbolzen (21) des hydrostatischen Übersetzungsgetriebes (3) bis zum Erreichen eines maximalen Mediumdurchflusses;

d) das Abbremsen des Fahrzeuges - der Verbrennungsmotor (1) hält an und eine erneute Vorwärtsfahrt verlangt einen fließenden Druck auf das Gaspedal (13).

Eine Rückwärtsfahrt dagegen verlangt folgende Tätigkeiten:

e) den Handgriff der Steuerungsrolle (29) bis zum Widerstand (Anschlag) in Richtung R-Rückwärtsfahrt bringen; danach dreht sich der Mitnehmer (23) entgegengesetzt und liegt im Bereich des Arbeitssitzes (34) der Ausnehmung (30) des einarmigen Hebels (22);

f) ein fließendes Drücken auf das Gaspedal (13) wie bei der Vorwärtsfahrt.

**Ansprüche**

1. Steuerungsvorrichtung für einen Verbrennungsmotor und einem mit ihm gekoppelten hydrostatischen Übersetzungsgetriebe, die mit verbundenen und zusammenwirkenden zweiarmigen Hebeln (15), Zugstange (14), Rollenhebeln (27), einarmigen Nockenhebeln (22) und Bowdenzügen (16, 17, 28) ausgestattet ist, dadurch gekennzeichnet, daß zwischen einem Gaspedal (13) und einem Steuerhebel (29) eine auf das hydrostatische Übersetzungsgetriebe (3) einwirkende Steuereinrichtung eingeschaltet ist, die mit einer zwischen den Enden der von dem Gaspedal (13) einerseits und des Steuerhebels andererseits kommende Bowdenzüge umgeschalteten Hebeleinrichtung (31, 26, 22) ausgestattet ist und die dabei mit einem den Steuerungsbolzen (21) des Übersetzungsgetriebes (3) bewegenden einarmigen Hebel (22) versehen ist, dessen kurvenförmige Führungsflächen (35, 36) einen abgefederten Führungsbolzen (26 a) führt, der an einem Rollenhebel (31) beweglich gelagert ist.

2. Steuerungsvorrichtung nach Anspruch 1, dadurch gekennzeichnet, daß der einarmige Hebel (22) mit seiner Nockenbohrung (33) einen Steuerungsbolzen (21) des hydrostatischen Getriebes (3) fest umfaßt und einseitig eine gebogene Führungsfläche als Steuerkurve mit einer Gleitkrümmung (35) und einer Hilfskrümmung (36) ausgestattet ist, in welche der Führungsbolzen (26 a) wechselweise einfaßt.

3. Steuerungsvorrichtung nach einem der Ansprüche 1 oder 2, dadurch gekennzeichnet, daß der Führungsbolzen (26 a) an einem Hebel (26) einer damit fest verbundenen Rolle (31) gelagert ist und unter der Einwirkung einer Zugfeder (25) steht, die mit dem Ende des zur Gaspedale (13) gehenden Bowdenzuges (16) verbunden ist.

4. Steuerungsvorrichtung nach einem der Ansprüche 1 bis 3, dadurch gekennzeichnet, daß die Rolle (31) von einem Bowdenzug (28) umschlungen ist, der anderen Endes eine Steuerungsrolle (29) umfaßt.

5. Steuerungsvorrichtung nach einem der Ansprüche 1 bis 4, dadurch gekennzeichnet, daß die Drehachse eines Mitnehmers (23) und die Längsachse des Steuerungsbolzens (21) auf einer gemeinsamen Ebene liegen, die sich mit der Ebene der neutralen Lage des Steuerungsbolzens (21) deckt, wogegen das zweite Ende des Seiles des Bowdenzuges (16) mit dem Arm eines zweiarmigen Hebels (15) verbunden ist, an dem das Ende des Seiles des Bodenzuges (17) angeschlagen ist, wobei das zweite Ende des Seiles des Bowdenzuges (17) mit einem zweiarmigen Hebel (18) verbunden ist, der über eine Zugstange (20) den Hebel des Vergasers (9) des Antriebsmotors (1) steuert.

6. Steuerungsvorrichtung nach einem der Ansprüche 1 bis 5, dadurch gekennzeichnet, daß der einarmige Hebel (22) eine symmetrische Nockenbohrung (33) gegenüber der Einlagerungsbohrung aufweist, wobei die Bohrung aus einer Gleitkrümmung (35) und einer Hilfskrümmung (36) besteht, wobei beide Krümmungen (35, 36) durch einen Bogen von einem die extremen Arbeitssitze (32) und (34) bildenden Radius verbunden sind.

7. Steuerungsvorrichtung nach einem der Ansprüche 1 bis 6, dadurch gekennzeichnet, daß die Gleitkrümmung (35) eine Radiusfunktion der Drehbewegung der auf dem Mitnehmer (23) eingelagerten Rolle ist.

8. Steuerungsvorrichtung nach einem der Ansprüche 1 bis 7, dadurch gekennzeichnet, daß der Führungshalter (26) des Mitnehmers (23) mit dem Rollenhebel (27) verbunden ist, wobei die Längsachse des Endes des Seiles (24) zusammen mit der Längsachse des Führungshalters (26) durch den Drehpunkt des Rollenhebels (27) geht, der über den Bowdenzug (28) mit der Steuerungsrolle (29) verbunden ist.

9. Steuerungsvorrichtung nach einem der Ansprüche 1 bis 8, dadurch gekennzeichnet, daß der einarmige Hebel (22) als dreieckförmige Schwinge mit einer gebogenen Ausnehmung (30) mit endseitigen Sitzen (32, 34) ausgestattet ist, in welche der Bolzen (26 a) sich wechselweise einlegt.

10. Steuerungsvorrichtung nach einem der Ansprüche 1 bis 9, dadurch gekennzeichnet, daß die Längsachse der Bolzen (26 a) und die Nockenbohrung (33) parallel verlaufen.

Fig. 1

Fig. 2

EP 0 432 788 A1

## Fig. 3

Fig. 4

Fig. 5

Fig. 6

**EP 90 12 4184**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 194 324   (JOSEPH LUCAS (INDUSTRIES)) <br> * das ganze Dokument * <br> – – – | 1 | B 60 K <br> 41/16 <br> F 16 H 61/42 |
| X | US-A-4 346 617   (SCHROEDER ET AL.) <br> * das ganze Dokument * <br> – – – | 1,2,6 | |
| A | DE-B-1 006 732   (ALBERT IRION NACHF.) <br> * Spalte 4, Zeilen 27 - 46; Figur 2 * <br> – – – | 1,2 | |
| A | FR-A-1 407 421   (LINDE'S EISMASCHINEN) <br> * Seite 4, rechte Spalte, Zeilen 4 - 9; Figur * <br> – – – | 1 | |
| A | DE-A-2 707 240   (RENOLD) <br> * Seite 32, Zeile 3 - Seite 33, Zeile 1; Figur 6 * <br> – – – – – | 1 | |

|  | RECHERCHIERTE SACHGEBIETE (Int. Cl.5) |
|---|---|
| | B 60 K <br> F 16 H |

Der vorliegende Recherchenbericht wurde für alle Patentansprüche erstellt

| Recherchenort | Abschlußdatum der Recherche | Prüfer |
|---|---|---|
| Berlin | 13 März 91 | KRIEGER P O |